# EUROPEAN PATENT SPECIFICATION

(11) **EP 4 108 371 B1**
(45) Date of publication and mention of the grant of the patent: **18.09.2024**
(21) Application number: 22739549.8
(22) Date of filing: 04.01.2022
(51) Int. Cl.: B23K 9/32, B23K 37/04, B24C 1/08, B24C 9/00, B24C 5/02, B24C 7/00

(54) **MICRO-CLEANING DEVICE FOR WELDING JIG**
MIKROREINIGUNGSVORRICHTUNG FÜR EINE SCHWEISSVORRICHTUNG
DISPOSITIF DE MICRO-NETTOYAGE POUR UN GABARIT DE SOUDAGE

(30) Priority: 12.01.2021 KR 20210004088
(43) Date of publication of application: 28.12.2022
(73) Proprietor: LG Energy Solution, Ltd., Seoul 07335 (KR)
(72) Inventor: KWAK, Dong Hoon, Daejeon 34122 (KR); YANG, Jun Seok, Daejeon 34122 (KR)
(74) Representative: Goddar, Heinz J.
(86) International application number: PCT/KR2022/000081
(87) International publication number: WO 2022/154351

(56) References cited:
- WO-A1-2011/067613
- CN-A- 106 078 532
- CN-A- 110 125 812
- CN-A- 111 002 231
- CN-A- 111 590 470
- JP-A- H08 132 346
- KR-A- 19990 033 416
- KR-A- 20020 011 220
- KR-A- 20040 071 358
- US-A1- 2011 312 252
- US-B2- 9 308 624

## Description

### [Technical Field]

The present invention relates to a combination of a welding jig and a welding jig micro-cleaning apparatus. More particularly, the present invention relates to such a combination which is capable of cleaning a laser welding jig using a micro-blaster.

### [Background Art]

Demand for secondary batteries as energy sources for electronic devices, such as mobile phones, laptop computers, and wearable devices, or electric vehicles has increased. Based on the type of electrode, secondary batteries are classified into a nickel-cadmium secondary battery, a nickel-hydride secondary battery, and a lithium secondary battery, and research and development on the lithium secondary battery, which has advantages of high operating voltage and high energy density per unit weight, has been actively conducted.

Based on the shape of a battery case, the lithium secondary battery is classified as a prismatic secondary battery or a cylindrical secondary battery having an electrode assembly mounted in a metal can or a pouch-shaped secondary battery having an electrode assembly mounted in a pouch case made of an aluminum laminate sheet.

For a secondary battery cell, an electrode assembly, obtained by stacking or winding a negative electrode and a positive electrode in the state in which a separator is interposed therebetween, is received in a case, and an electrode tab protruding from the electrode assembly is connected to an electrode lead. The electrode tab and the electrode lead are connected to each other by laser welding or ultrasonic welding. In general, the electrode tab and the electrode lead are fixed to a welding jig, and welding is performed on a welding portion therebetween. When the electrode tab and the electrode lead are welded by ultrasonic welding, however, foreign matter, such as spatter, is generated from the welding portion, and the foreign matter is attached to the welding jig, whereby welding quality between the electrode tab and the electrode lead is lowered.

Meanwhile, Patent Document 1 discloses a welding nozzle cleaning apparatus including a main body frame unit, an air supply unit coupled to the main body frame unit, a hose unit configured to allow air supplied from the air supply unit to move therethrough, and a collection unit coupled to the main body frame unit, the collection unit being provided at one side thereof with an opening, through which a nozzle is introduced, the hose unit being inserted into the collection unit so as to be coupled thereto; however, the construction of a micro-blaster for cleaning a welding jig is not disclosed.

### (Prior Art Document)

(Patent Document 1) Korean Registered Patent Publication No. 10-1988335

CN 111 590 470 A relates to a metal plate surface derusting and sandblasting device.

CN 110 125 812 A relates to metal panel sandblasting and clamping mechanism.

CN 111 002 231 A relates to an abrasive spraying device.

WO 2011/067613 A1 relates to portable abrasive blasting equipment for surface cleaning.

US 9,308,624 B2 provides an apparatus for removing a thin-film layer on a periphery of a substrate of a plate-like member.

CN 106 078 532 A relates to a sandblasting machine for roughening and cleaning dental products.

KR 2004 0071358 A relates to a sand blaster.

JP H08 132346 A relates to work fixing device which prevents a work or the like from being lifted up by jetting highpressure air from a blast gun at a high speed.

KR 1999 0033416 A relates to a device for cleaning the condition of a metal surface on which a strain gauge is to be attached.

KR 2002 0011220 A relates to a sandblasting machine capable of automatically processing a workpiece when a workpiece to be processed is put into a grinding table and operated.

### [Disclosure]

### [Technical Problem]

The present invention has been made in view of the above problems, and it is an object of the present invention to remove pollutants, such as spatter, from a welding jig using a micro-blaster, thereby improving welding quality.

It is another object of the present invention to provide a welding jig micro-cleaning apparatus capable of simplifying a welding jig cleaning operation through a novel welding jig mounting structure, thereby improving cleaning efficiency.

### [Technical Solution]

In order to accomplish the above objects, a combination of a welding jig and a welding jig micro-cleaning apparatus according to claim 1 is provided which includes a housing (100), a sandbox (200) connected to the housing, an air supply unit (300) connected to the sandbox with a hose, a blasting gun (500) positioned in the housing, a jig fixing portion (600) positioned at a lower end of the blasting gun (500), and a controller (400), wherein the jig fixing portion (600) includes a magnetic unit (640) configured to fix a welding jig (700).

In the combination of a welding jig and a welding jig micro-cleaning apparatus according to the present invention, the jig fixing portion (600) includes a sliding unit (620) movable horizontally at the lower end of the blasting gun (500).

The sliding unit (620) may be rotatable by a predetermined angle in a horizontal direction.

In the combination of a welding jig and a welding jig micro-cleaning apparatus according to the present invention, the blasting gun includes a blasting gun inlet (510) provided at a tip end of the blasting gun (500), wherein the blasting gun inlet (510) includes a discharge port (511) and a suction port (512).

The blasting gun inlet (510) may include a sealing portion (560).

The sealing portion (560) may contact a die (610) of the jig fixing portion (600) such that the welding jig (700) is positioned in an inner space of the sealing portion.

The sealing portion (560) may be made of an elastic material.

The blasting gun (500) may be connected to a moving unit so as to be movable upwards and downwards.

The sandbox (200) and the air supply unit (300) may be configured to adjust supply amounts of air and sand under control of the controller (400) .

The housing (100) may include a housing door (110), and the housing door (110) may include an observation window (120).

In the present invention, one or more constructions that do not conflict with each other may be selected and combined from among the above constructions.

### [Advantageous Effects]

The combination of a welding jig and a welding jig micro-cleaning apparatus according to the present invention is capable of removing pollutants, such as spatter, from a welding jig during a laser welding process, thereby improving laser welding quality.

The present invention has an advantage in that a welding jig cleaning effect is improved through horizontal movement and upward-downward rotation of a jig fixing portion.

The combination of a welding jig and a welding jig micro-cleaning apparatus according to the present invention may be located in a hermetically sealed housing, whereby it is possible to prevent secondary pollution due to cleaning.

### [Description of Drawings]

FIG. 1 is a schematic view of a battery cell according to an embodiment of the present invention.
FIG. 2 is a perspective view showing the external appearance of a welding jig micro-cleaning apparatus according to an embodiment of the present invention.
FIG. 3 is a schematic view of the micro-cleaning apparatus according to the embodiment of the present invention positioned in a housing of FIG. 2.
FIG. 4 is a schematic view of a blasting gun according to an embodiment of the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a micro-cleaning apparatus according to the present invention will be described with reference to the accompanying drawings.

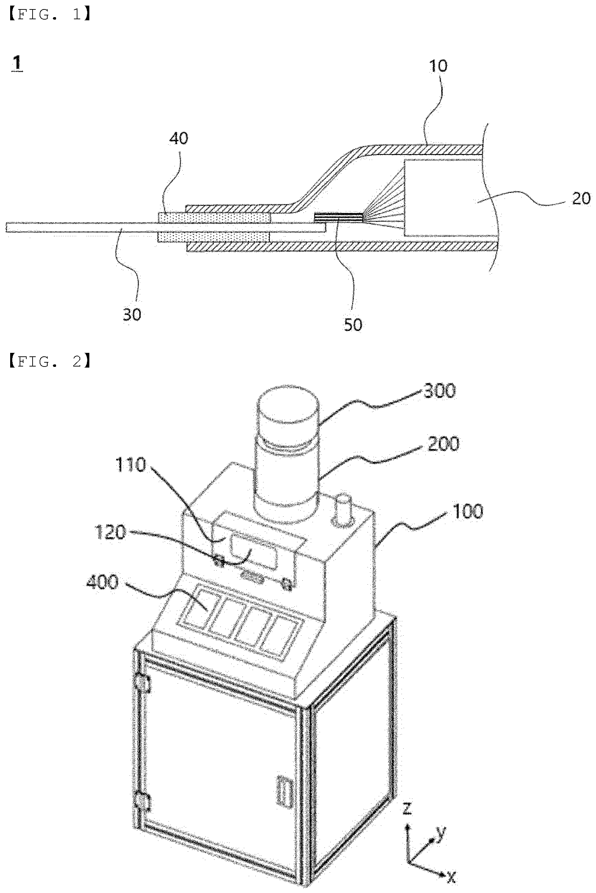

FIG. 1 is a schematic view of a battery cell according to an embodiment of the present invention.

Referring to FIG. 1, the battery cell 1 according to the embodiment of the present invention is a pouch-shaped secondary battery. The battery cell 1 may include a battery case 10, an electrode assembly 20, an electrode lead 30, an insulating tape 40, and an electrode tab 50.

The battery case 10 may define the external appearance of the battery cell 1, and may receive the electrode assembly 20, the electrode lead 30, and the electrode tab 50, a description of which will follow, therein. The battery case 10 may be configured in the form of an aluminum pouch, and an aluminum thin film may be interposed between an insulating layer made of a polymer material and an adhesive layer made of a polymer material of the aluminum pouch.

The electrode assembly 20 may be received in the battery case 10, and may include a positive electrode plate, a negative electrode plate, and a separator. Each of the electrode plates (positive electrode plates and negative electrode plates) of the electrode assembly 20 may be configured to have a structure in which an active material slurry is applied to an electrode current collector. The active material slurry may generally be formed by stirring active material particles, an auxiliary conductor, a binder, and a plasticizer in the state in which a solvent is added thereto. Each electrode plate may have an uncoated portion to which the active material slurry is not applied, and an electrode tab 50, a description of which will follow, corresponding to each electrode plate may be formed at the uncoated portion.

The electrode lead 30 may be electrically connected to the electrode assembly 20, and may protrude outwards from the battery case 10. A pair of electrode leads 30 may be provided, and the pair of electrode leads 30 may include a positive electrode lead and a negative electrode lead.

The pair of electrode leads 30 may be connected to the electrode assembly 20, and may protrude outwards from the battery case 10 in the same direction or in opposite directions.

The insulating tape 40 may be provided so as to correspond in number to the electrode lead 30. In this embodiment, therefore, a pair of insulating tapes 40 may be provided.

The pair of insulating tapes 40 may prevent the occurrence of short circuiting between the battery case 10 and the electrode lead 30 and may increase sealing force of the battery case 10.

The electrode tabs 50 may protrude from the electrode assembly 20 in order to connect the electrode lead 30 and the electrode assembly 20 to each other. Here, the electrode tab 50 may include a positive electrode tab and a negative electrode tab, each of which may be formed so as to protrude from the electrode assembly 20. That is, the positive electrode tab may be formed so as to protrude from the positive electrode plate of the electrode assembly 20, and the negative electrode tab may be formed so as to protrude from the negative electrode plate of the electrode assembly 20.

The electrode tab 50 may include a plurality of positive electrode tabs and a plurality of negative electrode tabs. In this case, the plurality of positive electrode tabs may be connected to the positive electrode lead, which is one of the electrode leads 30, and the plurality of negative electrode tabs may be connected to the negative electrode lead, which is the other of the electrode leads 30.

The electrode tab 50 may be coupled to the electrode lead 30 by laser welding. Laser welding exhibits higher welding strength than ultrasonic welding, i.e. conventional main ultrasonic welding, and does not require a considerable welding width, which is required by the main ultrasonic welding. In addition, for laser welding, problems, such as wear or bending of equipment and burning of the electrode tab 50, do not occur when welding is performed, unlike the conventional main ultrasonic welding.

In addition, for laser welding, the electrode lead 30 and the electrode tab 50 may be fixed and supported by a welding jig. Pollutants, such as spatter, generated during laser welding are attached to the welding jig, which leads to poor welding between the electrode lead 30 and the electrode tab 50.

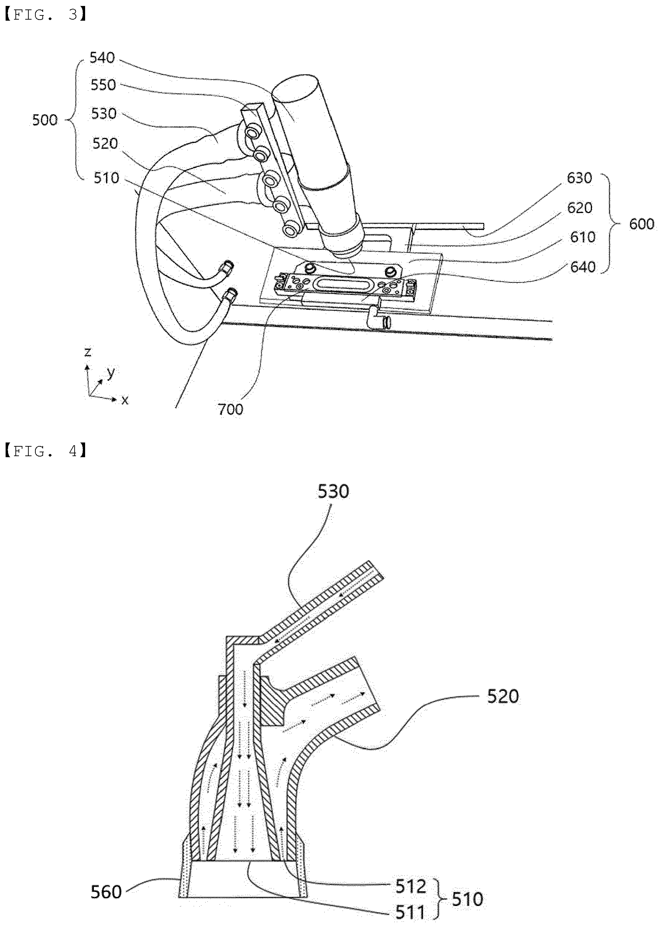

FIG. 2 is a perspective view showing the external appearance of a welding jig micro-cleaning apparatus of the combination of a welding jig and a welding jig micro-cleaning apparatus according to an embodiment of the present invention, FIG. 3 is a schematic view of the combination of a welding jig and a welding jig micro-cleaning apparatus according to the embodiment of the present invention positioned in a housing of FIG. 2, and FIG. 4 is a schematic view of a blasting gun of the combination of a welding jig and a welding jig micro-cleaning apparatus according to an embodiment of the present invention.

Referring to FIGS. 2 to 4, the welding jig micro-cleaning apparatus includes a housing 100, a sandbox 200, an air supply unit 300, a controller 400, a jig fixing portion 600, and a blasting gun 500. The jig fixing portion and the blasting gun are positioned in the housing 100.

First, when describing the housing 100 in detail, the housing is a portion that defines the external appearance of the welding jig micro-cleaning apparatus. The housing 100 may be formed in a hexahedral shape having an empty inner space. A housing door 110 may be positioned at an upper part of a front end of the housing 100. The housing door 110 may be configured to open and close a part of a front surface of the housing 100 and a part of an upper end of the housing. After the housing door 110 is opened, a welding jig 700, a description of which will follow, may be mounted to the jig fixing portion 600 located in the housing or may be separated from the jig fixing portion 600 and taken out to the outside. The housing door 110 may be manually opened and closed, and may be connected to an automatic control system so as to be automatically opened and closed as needed. A sealing means may be provided at a portion at which an edge of the housing door 110 and the housing 100 are connected to each other in tight contact with each other in order to hermetically seal the interior of the housing, whereby it is possible to prevent polluted sand or other pollutants dispersed during cleaning from being discharged to the outside.

An observation window 120 may be provided in a front surface (xz plane) of the housing door 110. Cleaning of the welding jig 700 in the housing 100 may be observed through the observation window 120.

Next, the sandbox 200 and the air supply unit 300 will be described in detail.

The sandbox 200 may be located above the housing 100, and the air supply unit 300 may be connected to the sandbox 200. The sandbox 200 may be formed in an approximately cylindrical shape or an approximately hexahedral shape. However, the shape of the sandbox is not particularly restricted as long as sand and other necessary members can be received in an inner space thereof.

The air supply unit 300 may be an air compressor. Compressed air from the air supply unit 300 may be supplied to the sandbox 200 through a compressed air supply hose (not shown). A compressed air distribution means (not shown), a cut-off valve (not shown), a pressure control valve (not shown), and a flow control valve (not shown) may be disposed in the compressed air supply hose. Compressed air from the air supply unit 300 may be supplied to the sandbox 200 and other rear equipment through the compressed air distribution means.

First compressed air (not shown), which is some of compressed air from the air supply unit 300, may be supplied to the sandbox 200 through a connection pipe (not shown) so as to be mixed with sand.

A sand and air discharge port (not shown) may be located at a lower end of the sandbox 200, and a three-way valve (not shown) may be located in the air discharge port. Sand and air mixed in the sandbox 200 may be introduced into a first hole of the three-way valve, and second compressed air (not shown), which is compressed air from the air supply unit 300, may be introduced into a second hole of the three-way valve. The compressed air introduced into the second hole and the sand and air mixture introduced into the first hole may be discharged together through a third hole of the three-way valve. Here, the third hole may be connected to a supply hose 530 in order to transfer the sand supplied from the sandbox 200 to the blasting gun 500. The amount and flow speed of sand supplied to the supply hose 530 may be adjusted using the first compressed air and the second compressed air, and a control valve (not shown) may be mounted on a transfer line for the first compressed air and the second compressed air in order to adjust the flow rate of compressed air.

Next, the controller 400 will be described.

The controller 400 according to the present invention may be connected to a side surface of the housing 100. The controller 400 may control driving of the air supply unit 300, operation of the control valve (not shown) configured to adjust flow rate of compressed air, upward and downward movement of a support portion 550 of the blasting gun 500, a description of which will follow, on and off of a magnetic unit, and horizontal movement and rotation of a sliding unit 620, a description of which will follow.

Next, the blasting gun 500 will be described.

In the present invention, a supply hose 530 connected to the third hole of the three-way valve located at the lower end of the sandbox 200 is connected to the blasting gun 500 to supply the sand and the compressed air discharged from the third hole of the three-way valve to the blasting gun 500. A discharge hose 520 is located spaced apart from the supply hose 530 by a predetermined distance, and the supply hose 530 and the discharge hose 520 extend into a body portion 540 so as to be connected to the body portion 540. Flow of a fluid in the supply hose 530, the discharge hose 520, and the body portion 540 will be described below in detail. The sand and the compressed air introduced into the body portion 540 through the supply hose 530 are sprayed through a blasting gun inlet 510 to remove pollutants from the welding jig 700, a description of which will follow. The body portion 540, which is connected to the supply hose 530 and the discharge hose 520, may be fixed to a side wall of the housing 100 via the support portion 550. In addition, the support portion 550 may be controlled by the controller so as to be movable upwards and downwards. The support portion 550 may be coupled to a vertical moving cylinder (not shown) so as to be movable upwards and downwards, and the vertical moving cylinder may be controlled by the controller 400.

Referring to FIG. 4, the blasting gun inlet 510 may include a discharge port 511 and a suction port 512. The discharge port 511 may be located at a tip end of an internal flow path (not shown) of the body portion 540 to which the supply hose 530 extending into the body portion 540 is connected. The discharge port 511 may spray the sand and the compressed air supplied from the supply hose 530 to the welding jig 700, a description of which will follow, disposed thereunder in order to clean the welding jig. The internal flow path of the body portion 540 may be a hose or a stainless steel pipe. A partition wall of the body portion 540 is spaced apart from a partition wall of the internal flow path while wrapping the internal flow path of the body portion 540, whereby a space functioning as an external flow path (not shown) is formed. The partition wall of the body portion 540 and the partition wall of the internal flow path are spaced apart from each other, whereby the suction port 512 is formed at a tip end of the blasting gun inlet 510. The suction port 512 is located around the discharge port 511. The discharge hose 520 is connected to the body portion 540 through the partition wall of the body portion so as to be opposite the suction port 512 in the state in which the external flow path is located therebetween. During a process in which the sand and the compressed air are sprayed through the discharge port 511 to remove pollutants from the welding jig 700 in order to clean the welding jig, the sprayed sand and the pollutants separated from the welding jig 700 are suctioned through the suction port 512.

A sealing portion 560 may be located at an external partition wall around the blasting gun inlet 510. The sealing portion 560 may be coupled to the circumference of the blasting gun inlet 510 so as to extend outwards from the body portion 540, or may be configured to receive the welding jig 700 mounted to the jig fixing portion 600, a description of which will follow, therein.

A tip end surface of the sealing portion 560 may be brought into tight contact with an upper end surface of a die 610, a description of which will follow, and specifically may be made of an elastic material, such as silicone or synthetic rubber. The reason for this is that, when the jig fixing portion 600 is moved leftwards and rightwards or upwards and downwards, the jig fixing portion comes into contact with the sealing portion 560, whereby damage, such as scratch, to the welding jig 700 mounted to the jig fixing portion 600 is prevented. In addition, the sealing portion 560 may be permanently fixed to the circumference of the blasting gun inlet 510 by adhesion, or may be detachably attached thereto through an attachment and detachment means. Here, the tip end surface of the sealing portion 560, which is brought into tight contact with the die 610, a description of which will follow, may be coated with a metal material. In this case, the extent of tight contact between the sealing portion and the die 610 is improved by a magnetic unit 640, a description of which will follow, which is advantageous in suctioning the removed pollutant, such as spatter.

Next, the jig fixing portion 600 will be described in detail.

The jig fixing portion 600 may be located under the blasting gun 500, and may include a die 610, a sliding unit 620, a sliding slit 630, and a magnetic unit 640. The welding jig 700 is located at an upper end of the die 610 so as to be cleaned by the sand and the compressed air sprayed from the discharge port 511 of the blasting gun 500. The die 610 may have a plate shape. The magnetic unit 640 may be located at the die 610 in order to fix the welding jig 700, whereby it is possible to prevent separation or displacement of the welding jig 700 during a cleaning process. The magnetic unit 640 may be constituted by a permanent magnet or an electromagnet. In the case in which the magnetic unit is constituted by an electromagnet, an on-off lever (not shown) may be provided. The magnetic unit 640 may be magnetized or demagnetized by manipulation of the on-off lever. In addition, magnetic force of the magnetic unit may be controlled. In the present invention, therefore, it is preferable for the magnetic unit 640 to be constituted by an electromagnet.

The die 610 may be connected to the sliding unit 620, and the sliding unit 620 may be connected to a rear sliding driving portion (not shown) through the sliding slit 630, which is formed in the partition wall of the housing 100. The sliding unit 620 may be moved leftwards and rightwards in a horizontal direction by manipulation of the sliding driving portion. After the welding jig 700 is mounted to the upper end of the die 610, the welding jig 700 may be moved under the blasting gun inlet 510 through operation of the sliding unit 620, and cleaning may be performed.

In addition, a hinge coupling portion (not shown) provided at the sliding unit 620 to allow the die 610 to be rotated by a predetermined angle may be included. As a result, a disposition angle of the welding jig 700 may be adjusted, which is advantageous in effectively removing pollutants from a bent portion of the welding jig 700 through cleaning.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and technical idea of the present invention, and it will be obvious that such changes and modifications fall within the scope of the appended claims.

### (Description of Reference Numerals)

- 1:: Battery cell
- 10:: Battery case
- 20:: Electrode assembly
- 30:: Electrode lead
- 40:: Insulating tape
- 50:: Electrode tab
- 100:: Housing
- 110:: Housing door
- 120:: Observation window
- 200:: Sandbox
- 300:: Air supply unit
- 400:: Controller
- 500:: Blasting gun
- 510:: Blasting gun inlet
- 511:: Discharge port
- 512:: Suction port
- 520:: Discharge hose
- 530:: Supply hose
- 540:: Body portion
- 550:: Support portion
- 560:: Sealing portion
- 600:: Jig fixing portion
- 610:: Die
- 620:: Sliding unit
- 630:: Sliding slit
- 640:: Magnetic unit
- 700:: Welding jig

## Claims

1. A combination of a welding jig (700) and a welding jig micro-cleaning apparatus comprising:
a housing (100);
a sandbox (200) connected to the housing (100);
an air supply unit (300) connected to the sandbox (200) with a hose;
a blasting gun (500) positioned in the housing (100), wherein the blasting gun (500) comprises a blasting gun inlet (510) provided at a tip end of the blasting gun (500), and
wherein the blasting gun inlet (510) comprises a discharge port (511) and a suction port (512);
a jig fixing portion (600) positioned at a lower end of the blasting gun (500), wherein the welding jig (700) is mounted to the jig fixing portion (600)located in the housing (100); and
a controller (400),
wherein the jig fixing portion (600) comprises a magnetic unit (640) configured to fix the welding jig (700) and a sliding unit (620) movable horizontally at the lower end of the blasting gun (500) such that the welding jig (700) is moveable under the blasting gun inlet (510) through operation of the sliding unit (620).

2. The combination according to claim 1, wherein the sliding unit (620) is rotatable by a predetermined angle in a horizontal direction.

3. The combination according to one of the preceding claims , wherein the blasting gun inlet (510) comprises a sealing portion (560).

4. The combination according to claim 3, wherein the sealing portion (560) contacts a die (610) of the jig fixing portion (600) such that the welding jig (700) is positioned in an inner space of the sealing portion (560).

5. The combination according to claim 4, wherein when the welding jig (700) is moved under the blasting gun inlet (510) of the blasting gun (500) through operation of the sliding unit (620), cleaning may be performed.

6. The combination according to claim 3, wherein the sealing portion (560) is made of an elastic material.

7. The combination according to claim 6, wherein a tip end surface of the sealing portion (560) which is brought into tight contact with a die (610) of the jig fixing portion (600) is coated with a metal material.

8. The combination according to claim 1, wherein the blasting gun (500) is connected to a moving unit so as to be movable upwards and downwards.

9. The combination according to claim 1, wherein the sandbox (200) and the air supply unit (300) are configured to adjust supply amounts of air and sand under control of the controller (400).

10. The combination according to claim 9, wherein a three-way valve is located in an air discharge port, wherein sand and air mixed in the sandbox (200) is introduced into a first hole of the three-way valve, and second compressed air from the air supply unit (300) is introduced into a second hole of the three-way valve, and wherein the second compressed air introduced into the second hole and the sand and air mixture introduced into the first hole are discharged together through a third hole of the three-way valve connected to a supply hose (530) in order to transfer the sand supplied from the sandbox (200) to the blasting gun (500).

11. The combination according to claim 1, wherein the housing (100) comprises a housing door (110), and
wherein the housing (100) door comprises an observation window (120).

## Patentansprüche

1. Kombination einer Schweißvorrichtung (700) und einer Mikroreinigungsvorrichtung für eine Schweiß-Spannvorrichtung, aufweisend:
ein Gehäuse (100);
eine Sandbox (200), die mit dem Gehäuse (100) verbunden ist;
eine Luftversorgungseinheit (300), die über einen Schlauch mit der Sandbox (200) verbunden ist;
eine Strahlkanone (500), die in dem Gehäuse (100) positioniert ist, wobei die Strahlkanone (500) einen Strahlkanoneneinlass (510) aufweist, der an einem Spitzenende der Strahlkanone (500) vorgesehen ist, und
wobei der Strahlkanoneneinlass (510) eine Auslassöffnung (511) und eine Ansaugöffnung (512) aufweist;
einen Spannvorrichtungs-Befestigungsabschnitt (600), der an einem unteren Ende der Strahlkanone (500) positioniert ist, wobei die Schweiß-Spannvorrichtung (700) an dem Spannvorrichtungs-Befestigungsabschnitt (600) montiert ist, der sich in dem Gehäuse (100) befindet; und
eine Steuerung (400),
wobei der Spannvorrichtungs-Befestigungsabschnitt (600) eine Magneteinheit (640), die konfiguriert ist, um die Schweiß-Spannvorrichtung (700) zu befestigen, und eine Schiebeeinheit (620) aufweist, die horizontal an dem unteren Ende der Strahlkanone (500) bewegbar ist, so dass die Schweiß-Spannvorrichtung (700) unter dem Strahlkanoneneinlass (510) durch Betätigung der Schiebeeinheit (620) bewegbar ist.

2. Kombination nach Anspruch 1, wobei die Schiebeeinheit (620) um einen vorbestimmten Winkel in einer horizontalen Richtung drehbar ist.

3. Kombination nach einem der vorhergehenden Ansprüche, wobei der Strahlkanoneneinlass (510) einen Dichtungsabschnitt (560) aufweist.

4. Kombination nach Anspruch 3, wobei der Dichtungsabschnitt (560) einen Die (610) des Spannvorrichtungs-Befestigungsabschnitts (600) berührt, so dass die Schweiß-Spannvorrichtung (700) in einem Innenraum des Dichtungsabschnitts (560) positioniert ist.

5. Kombination nach Anspruch 4, wobei, wenn die Schweiß-Spannvorrichtung (700) unter dem Strahlkanoneneinlass (510) der Strahlkanone (500) durch Betätigung der Schiebeeinheit (620) bewegt wird, eine Reinigung durchgeführt werden kann.

6. Kombination nach Anspruch 3, wobei der Dichtungsabschnitt (560) aus einem elastischen Material hergestellt ist.

7. Kombination nach Anspruch 6, wobei eine Spitzenendfläche des Dichtungsabschnitts (560), die in engen Kontakt mit einem Die (610) des Spannvorrichtungs-Befestigungsabschnitts (600) gebracht wird, mit einem Metallmaterial beschichtet ist.

8. Kombination nach Anspruch 1, wobei die Strahlkanone (500) mit einer Bewegungseinheit so verbunden ist, dass sie nach oben und unten beweglich ist.

9. Kombination nach Anspruch 1, wobei die Sandbox (200) und die Luftversorgungseinheit (300) so konfiguriert sind, dass sie die Zufuhrmengen an Luft und Sand unter der Steuerung der Steuerung (400) einstellen.

10. Kombination nach Anspruch 9, wobei sich ein Dreiwegeventil in einer Luftauslassöffnung befindet, wobei Sand und Luft, die in der Sandbox (200) gemischt sind, in ein erstes Loch des Dreiwegeventils eingeführt werden, und zweite Druckluft von der Luftversorgungseinheit (300) in ein zweites Loch des Dreiwegeventils eingeführt wird, und wobei die zweite Druckluft, die in das zweite Loch eingeführt wird, und das Sand-Luft-Gemisch, das in das erste Loch eingeführt wird, zusammen durch ein drittes Loch des Dreiwegeventils, das mit einem Versorgungsschlauch (530) verbunden ist, ausgelassen werden, um den Sand, der von der Sandbox (200) zugeführt wird, zu der Strahlkanone (500) zu übertragen.

11. Kombination nach Anspruch 1, wobei das Gehäuse (100) eine Gehäusetür (110) aufweist, und
wobei die Gehäusetür (100) ein Beobachtungsfenster (120) aufweist.

## Revendications

1. Combinaison d'un gabarit de soudage (700) et d'un appareil de micro-nettoyage de gabarits de soudage, comprenant :
un boîtier (100) ;
un bac à sable (200) raccordé au boîtier (100) ;
un module d'alimentation en air (300) raccordé au bac à sable (200) par un tuyau ;
un pistolet de sablage (500) positionné dans le boîtier (100), le pistolet de sablage (500) comprenant une entrée (510) du pistolet de sablage agencée sur un embout du pistolet de sablage (500),
et
l'entrée (510) du pistolet de sablage comprenant un orifice de refoulement (511) et un orifice d'aspiration (512) ;
une partie de fixation du gabarit (600) positionnée sur une extrémité inférieure du pistolet de sablage (500), le gabarit de soudage (700) étant monté sur la partie de fixation du gabarit (600) située dans le boîtier (100) ; et
un régulateur (400),
la partie de fixation du gabarit (600) comprenant un module magnétique (640) configuré pour fixer le gabarit de soudage (700), et une unité coulissante (620) se déplaçant horizontalement à l'extrémité inférieure du pistolet de sablage (500) de sorte que le gabarit de soudage (700) puisse être déplacé sous l'entrée (510) du pistolet de sablage par l'actionnement de l'unité coulissante (620).

2. Combinaison selon la revendication 1, l'unité coulissante (620) pouvant être tournée à un angle prédéterminé dans le sens horizontal.

3. Combinaison selon une quelconque des revendications précédentes, l'entrée (510) du pistolet de sablage comprenant un élément d'étanchéité (560).

4. Combinaison selon la revendication 3, l'élément d'étanchéité (560) étant au contact d'une matrice (610) de la partie de fixation du gabarit (600), de sorte que le gabarit de soudage (700) soit positionné dans un espace interne de l'élément d'étanchéité (560).

5. Combinaison selon la revendication 4, dans laquelle, lorsque l'on déplace le gabarit de soudage (700) sous l'entrée (510) du pistolet de sablage (500) par l'actionnement de l'unité coulissante (620), un nettoyage peut être effectué.

6. Combinaison selon la revendication 3, l'élément d'étanchéité (560) étant réalisé avec une matière élastique.

7. Combinaison selon la revendication 6, une surface de l'embout de l'élément d'étanchéité (560), amenée en contact étroit avec une matrice (610) de la partie de fixation du gabarit (600), étant revêtue d'une matière métallique.

8. Combinaison selon la revendication 1, le pistolet de sablage (500) étant raccordé à une unité mobile de façon à pouvoir être déplacé en haut et en bas.

9. Combinaison selon la revendication 1, le bac à sable (200) et le module d'alimentation en air (300) étant configurés afin d'ajuster des quantités d'air et de sable sous le contrôle du régulateur (400).

10. Combinaison selon la revendication 9, une vanne à trois voies étant située dans un orifice de refoulement d'air, le sable et l'air mélangés dans le bac à sable (200) étant introduits dans un premier orifice de la vanne à trois voies, et un deuxième air comprimé provenant du module d'alimentation en air (300) étant introduit dans un deuxième orifice de la vanne à trois voies, et le deuxième air comprimé introduit dans le deuxième orifice et le mélange de sable et d'air introduit dans le premier orifice étant refoulés ensemble à travers un troisième orifice de la vanne à trois voies raccordé à un tuyau d'alimentation (530) de façon à transférer le sable, amené du bac à sable (200), dans le pistolet de sablage (500).

11. Combinaison selon la revendication 1, le boîtier (100) comprenant une porte du boîtier (110), et
la porte du boîtier (100) comprenant une fenêtre d'observation (120).
